# FASCICULE DE BREVET EUROPEEN

(11) **EP 3 665 403 B1**
(45) Date de publication et mention de la délivrance du brevet: **28.06.2023**
(21) Numéro de dépôt: 18746128.0
(22) Date de dépôt: 19.07.2018
(51) Int. Cl.: F16H 19/06, F16H 25/20, F16H 25/22

(54) **ANTI-ROTATION A CABLES**
VERDREHSICHERUNG MIT KABELN
ANTI-ROTATION WITH CABLES

(30) Priorité: 09.08.2017 FR 1757618
(43) Date de publication de la demande: 17.06.2020
(73) Titulaire: Commissariat à l'Énergie Atomique et aux Énergies Alternatives, 75015 Paris (FR)
(72) Inventeur: GARREC, Philippe, 91190 Gif-sur-Yvette (FR)
(74) Mandataire: Lavialle, Bruno François Stéphane
(86) Numéro de dépôt international: PCT/EP2018/069691
(87) Numéro de publication internationale: WO 2019/029976

(56) Documents cités:
- WO-A1-2014/128178
- DE-A1- 10 313 739
- FR-A1- 3 018 327

## Description

L'invention concerne un vérin à câble comportant un ensemble vis/écrou dont l'écrou est mobile en translation et attelé par un câble à un élément à déplacer.

### ARRIERE PLAN DE L'INVENTION

Il est connu des vérins à câbles comportant une vis montée sur un châssis et un écrou coopérant avec la vis. L'écrou est associé à des moyens d'anti-rotation de sorte qu'une rotation relative de la vis et de l'écrou provoque un déplacement axial de l'écrou.

Les moyens d'anti-rotation connus comprennent généralement un galet ou un téton solidaire de l'écrou et monté glissant dans une rainure d'un châssis. De tels dispositifs d'anti-rotation requièrent des usinages et des ajustages très précis,en particulier lorsque la course est importante. De plus une maintenance rigoureuse est requise afin de conserver une performance satisfaisante du vérin, particulièrement dans le cas de vérins oeuvrant dans des environnements (poussières, humidité) difficiles. Ainsi, la diffusion des vérins à câbles est freinée par des coûts de fabrication et de maintenance élevés.

DE 103 13 739 A1 décrit un vérin à câble d'un système de commande d'embrayage et, en particulier, un actionneur à moteur électrique pour une utilisation en association avec un mécanisme de débrayage qui est monté coaxialement par rapport à un embrayage de véhicule.Un cylindre de la vis mère est relié coaxialement au moteur électrique, la vis mère étant reliée à une extrémité d'un câble, l'autre extrémité du câble étant reliée au mécanisme de débrayage. Le câble est d'une grande rigidité en torsion, de façon à empêcher la rotation de la vis mère.

### OBJET DE L'INVENTION

L'invention a pour objet de réduire les coûts de fabrication et/ou de maintenance d'un vérin à câble.

### RESUME DE L'INVENTION

Dans ce but, on prévoit un vérin comme décrit dans la revendication 1 comprenant un châssis, une vis montée sur le châssis et s'étendant selon un premier axe, un écrou coopérant avec la vis et un premier câble attelé à l'écrou et destiné à être fonctionnellement relié à un élément à déplacer. Le vérin comprend également un moteur agencé pour entraîner en rotation la vis ou l'écrou. Selon l'invention, le premier câble comprend au moins un premier tronçon s'étendant sensiblement parallèlement au premier axe, et le premier câble est agencé pour exercer des efforts s'opposant à un entraînement en rotation de l'écrou par la vis pour constituer des moyens d'anti-rotation de sorte qu'une rotation de la vis ou de l'écrou sous l'action du moteur provoque un déplacement relatif de l'écrou et la vis.

On obtient ainsi un vérin dépourvu de moyens d'anti-rotation autres que le premier câble relié à l'écrou. Les coûts de réalisation et de maintenance d'un tel vérin sont réduits, ce qui rend plus accessible cette technologie.

La raideur en torsion de la liaison entre l'écrou et l'élément à déplacer est augmentée lorsque le vérin comprend un deuxième câble attelé à l'écrou ou à la vis et qui est agencé pour exercer des efforts s'opposant à un entraînement en rotation de l'écrou par la vis pour constituer des moyens d'anti-rotation de sorte qu'une rotation de la vis ou de l'écrou sous l'action du moteur provoque un déplacement relatif de l'écrou et la vis. La résultante transversale des efforts appliqués par l'écrou sur la vis, et donc les frottements, sont réduits lorsqu'un tronçon du premier câble et un tronçon du deuxième câble s'étendent de part et d'autre du premier axe.

Le vérin peut agir sur une charge dans deux sens de levage/traction opposés lorsque le premier câble et/ou le deuxième câble est attelé à l'écrou ou à la vis de manière à exercer des efforts s'opposant à une rotation de l'écrou par rapport à la vis dans les deux sens du déplacement relatif de l'écrou et la vis.

Avantageusement, le vérin comprend un troisième câble attelé à l'écrou, et qui est fonctionnellement relié à l'élément à déplacer.

La raideur en torsion de la liaison entre l'écrou et l'élément à déplacer est encore augmentée lorsque le vérin comporte un quatrième câble attelé à l'écrou ou à la vis et qui est fonctionnellement relié à l'élément à déplacer. Selon un mode de réalisation préféré, un tronçon du troisième câble et un tronçon du quatrième câble s'étendent de part et d'autre du premier axe. Il est particulièrement avantageux que les tronçons du troisième câble et du quatrième câble s'étendent de part et d'autre du premier axe Ox dans un plan s'étendant sensiblement orthogonalement à un plan comprenant le premier tronçon du premier câble et le deuxième tronçon du deuxième câble.

Avantageusement encore, le premier et/ou le deuxième câble s'étendent entre l'écrou et un premier support intermédiaire et le troisième câble possède une première extrémité reliée au premier support intermédiaire et une deuxième extrémité destinée à être fonctionnellement reliée à l'élément à déplacer.

Selon un mode de réalisation préféré, le quatrième câble possède une première extrémité reliée au premier support intermédiaire et une deuxième extrémité destinée à être fonctionnellement reliée à l'élément à déplacer.

Un cinquième câble peut être attelé à l'écrou ou à la vis, et être fonctionnellement relié à l'élément à déplacer.

Un sixième câble peut être attelé à l'écrou ou à la vis, et être fonctionnellement relié à l'élément à déplacer.

La résultante transversale des efforts appliqués par l'écrou sur la vis, et donc les frottements, sont réduits lorsqu'un tronçon du cinquième câble et un tronçon du sixième câble s'étendent de part et d'autre du premier axe.

Préférentiellement, le premier et le deuxième câble s'étendent également entre l'écrou et un deuxième support intermédiaire et le cinquième câble est relié au deuxième support intermédiaire.

La rigidité du vérin est améliorée lorsque l'un quelconque des câbles est pré-chargé. Les jeux internes sont notablement réduits lorsque la vis est une vis à billes.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence annexés, parmi lesquelles :
- la figure 1 est une vue en perspective d'un vérin selon un premier mode de réalisation de l'invention ;
- la figure 2 est une vue en perspective d'un vérin selon un deuxième mode de réalisation de l'invention ;
- la figure 3 est une vue en perspective d'un vérin selon un troisième mode de réalisation de l'invention ;
- la figure 4 est une vue en perspective d'un vérin selon un quatrième mode de réalisation de l'invention ;
- la figure 5 est une vue en perspective d'un vérin selon un cinquième mode de réalisation de l'invention ;
- les figure 6 et 7 sont des vues en perspective d'un vérin selon un sixième mode de réalisation de l'invention ;
- la figure 8 est une vue en perspective d'un vérin selon un septième mode de réalisation de l'invention.

### DESCRIPTION DETAILLEE DE L'INVENTION

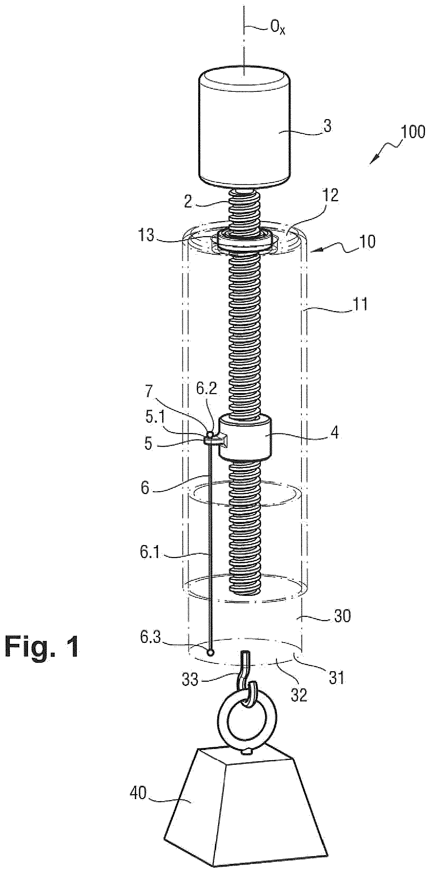

En référence à la figure 1, le vérin de l'invention, généralement désigné 100, comprend un châssis 10, ici une portion de cylindre 11 droit comprenant une base 12 au centre de laquelle un palier 13 accueille une vis 2 à rotation autour d'un premier axe Ox vertical. La vis 2 est une vis à billes et est entraînée en rotation par un moteur électrique 3. Un écrou 4 coopère avec la vis 2 et comprend un premier œillet 5 en saillie radiale de l'écrou 4. Un premier câble 6 s'étend parallèlement au premier axe Ox et comprend un premier tronçon 6.1 maintenu en sa première extrémité 6.2 dans le premier oeillet 5 par une première sertissure 7 venant en appui contre une première face 5.1 du premier oeillet 5. La deuxième extrémité 6.3 du câble 6 est reliée à un tube 30 monté à l'intérieur du cylindre 11 pour former une liaison glissière selon des modalités connues de l'homme du métier et non représentées. Le tube 30 comprend en son extrémité 31 une face transversale 32 pourvue d'un crochet 33 auquel est reliée une charge 40 à déplacer.

Sous l'effet du moteur 3, une rotation de la vis 2 provoque une rotation identique de l'écrou 4 en raison des frottements de contact entre la vis 2 et l'écrou 4. Ce déplacement met en tension le premier câble 6 qui vient alors exercer des efforts s'opposant à un entraînement en rotation de l'écrou 4 par la vis 2. Le premier câble 6 réalise alors - en sus de sa fonction de transmission des efforts de déplacement vers la charge 40 - une fonction d'anti-rotation de sorte qu'une rotation de la vis 2 sous l'action du moteur 3 provoque un déplacement de l'écrou 4 relativement à la vis 2. Ainsi, l'écrou 4 se déplace axialement sous l'effet de la rotation de la vis 2, sans tourner autour du premier axe Ox. Cependant, des déviations angulaires minimes de l'écrou sont permises autour de deux axes Oy et Oz, orthogonaux entre eux et contenus dans un plan normal au premier axe Ox. Ceci rend le vérin de l'invention tolérant aux oscillations de l'écrou par rapport à la vis selon un phénomène connu de l'homme de l'art et commun aux vis équipées d'éléments roulants (rouleaux ou billes).

On obtient ainsi un vérin 100 de levage dépourvu de moyens d'anti-rotation autres que le premier câble 6 relié à l'écrou 4. Les coûts de réalisation et de maintenance d'un tel vérin sont réduits ce qui rend cette technologie plus accessible.

Les éléments identiques ou analogues à ceux précédemment décrits porteront une référence numérique identique à celle-ci dans la description qui suit des sept modes de réalisation de l'invention.

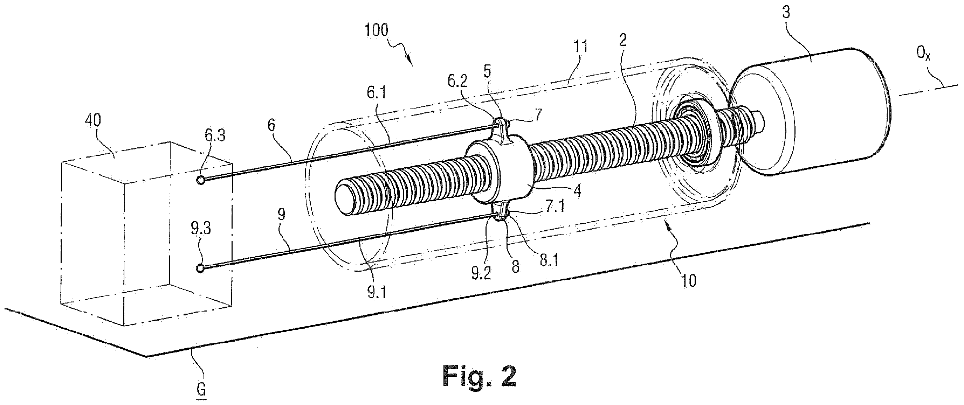

Selon un deuxième mode de réalisation de l'invention représenté en figure 2, la vis 2 s'étend selon un premier axe Ox horizontal et l'écrou 4 comprend un deuxième œillet 8 en saillie radiale de l'écrou 4 de manière à être diamétralement opposé au premier œillet 5. Un deuxième câble 9 s'étendant parallèlement au premier axe Ox et comprend un premier tronçon 9.1 maintenu en sa première extrémité 9.1 dans le deuxième œillet 8 par une deuxième sertissure 7.1 venant en appui contre une première face 8.1 du deuxième oeillet 8. La deuxième extrémité 9.3 du deuxième câble 9 et la deuxième extrémité 6.3 du premier câble 6 sont reliées à une charge 40 à déplacer reposant sur le sol G. Le premier tronçon 6.1 de premier câble 6 et le premier tronçon 9.1 de deuxième câble 9 s'étendent ainsi de part et d'autre du premier axe Ox.

Sous l'effet du moteur 3, une rotation de la vis 2 provoque une rotation identique de l'écrou 4 en raison des frottements de contact entre la vis 2 et l'écrou 4. Ce déplacement met en tension le premier câble 6 et le deuxième câble 9 qui viennent alors exercer des efforts s'opposant à un entraînement en rotation de l'écrou 4 par la vis 2. Le premier câble 6 et le deuxième câble 9 réalisent alors - en sus de leur fonction de transmission des efforts de déplacement vers la charge 40 - une fonction d'anti-rotation de sorte qu'une rotation de la vis 2 sous l'action du moteur 3 provoque un déplacement de l'écrou 4 relativement à la vis 2. Ainsi, l'écrou 4 se déplace axialement sous l'effet de la rotation de la vis 2, sans tourner autour du premier axe Ox.

On obtient ainsi un vérin 100 de ripage dépourvu de moyens d'anti-rotation autres que le premier câble 6 et le deuxième câble 9 reliés à l'écrou 4.

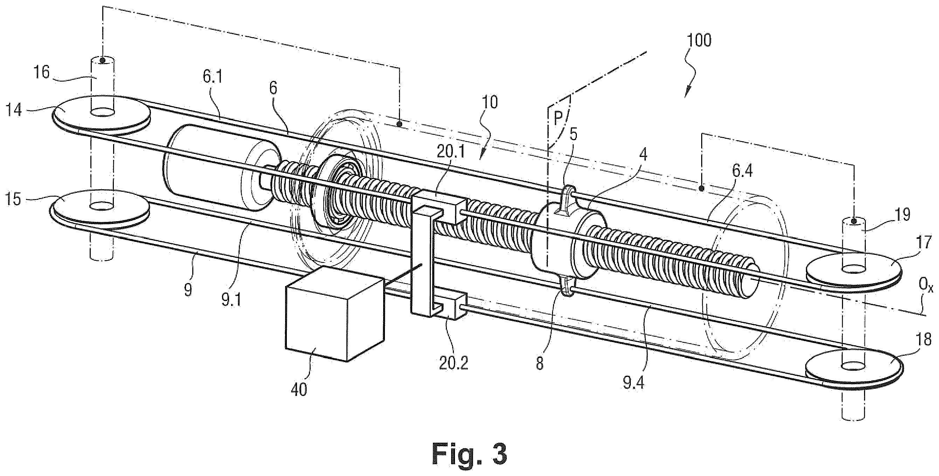

Selon un troisième mode de réalisation représenté en figure 3, le premier câble 6 est serti sur le premier œillet 5 et traverse celui-ci pour avoir un premier tronçon 6.1 et un deuxième tronçon 6.4 s'étendant parallèlement au premier axe Ox de part et d'autre d'un plan P orthogonal au premier axe Ox comprenant le premier œillet 5. De manière homologue, le deuxième câble 9 est serti sur le deuxième oeillet 8 et traverse celui-ci pour avoir un premier tronçon 9.1 et un deuxième tronçon 9.4 s'étendant parallèlement au premier axe Ox de part et d'autre du plan P qui comprend également le deuxième oeillet 8. Le premier tronçon 6.1 et le premier tronçon 9.1 sont respectivement enroulés autour d'une première poulie 14 et d'une deuxième poulie 15, la première poulie 14 et la deuxième poulie 15 étant solidaires d'un premier arbre 16 relié au châssis 10 et monté à rotation selon un axe perpendiculaire au premier axe Ox. Le deuxième tronçon 6.4 et le deuxième tronçon 9.4 sont respectivement enroulés autour d'une troisième poulie 17 et d'une quatrième poulie 18, la troisième poulie 17 et la quatrième poulie 18 étant solidaires d'un deuxième arbre 19 relié au châssis 10 et monté à rotation selon un axe perpendiculaire au premier axe Ox. Le premier tronçon 6.1 et le deuxième tronçon 6.4 du premier câble 6 se rejoignent en sortie de la première poulie 14 et de la troisième poulie 16 en une troisième sertissure 20.1. Le premier tronçon 9.1 et le deuxième tronçon 9.4 du deuxième câble 9 se rejoignent en sortie de la deuxième poulie 15 et de la quatrième poulie 19 en une quatrième sertissure 20.2. Les troisième et quatrième sertissures 20.1 et 20.2 sont reliées à une charge 40 à déplacer. Les câbles 6 et 9 sont préchargés, par exemple en agissant sur la distance séparant le premier arbre 16 et le deuxième arbre 19.

Le premier câble 6 et le deuxième câble 9 étant tendus, ils exercent des efforts s'opposant à un entraînement en rotation de l'écrou 4 par la vis 2 lors d'une rotation du moteur 3 dans les deux sens de déplacement de l'écrou 4 relativement à la vis 2. Ils réalisent alors - en sus de leur fonction de transmission des efforts de déplacement vers la charge 40 - une fonction d'anti-rotation de sorte qu'une rotation de la vis 2 sous l'action du moteur 3 provoque un déplacement de l'écrou 4 relativement à la vis 2. Le vérin à câble 100 selon le troisième mode de réalisation de l'invention permet un déplacement de la charge 40 dans deux sens opposés.

On obtient ainsi un vérin 100 à câble dépourvu de moyens d'anti-rotation autres que les premier et deuxième câbles 6 et 9 reliés à l'écrou 4.

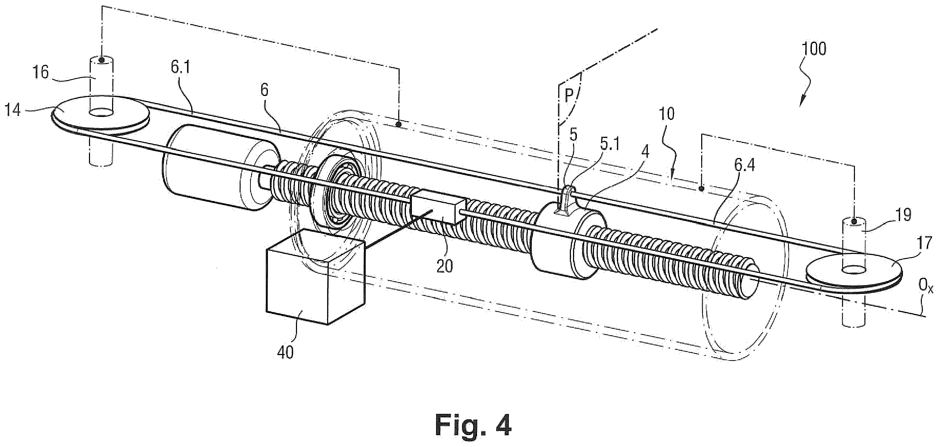

Le quatrième mode de réalisation représenté en figure 4 est une variante du troisième mode de réalisation de l'invention dans lequel seul le premier câble 6 s'oppose à une rotation de l'écrou 4 par rapport à la vis 2 dans les deux sens de déplacement de l'écrou 4 par rapport à la vis 2.

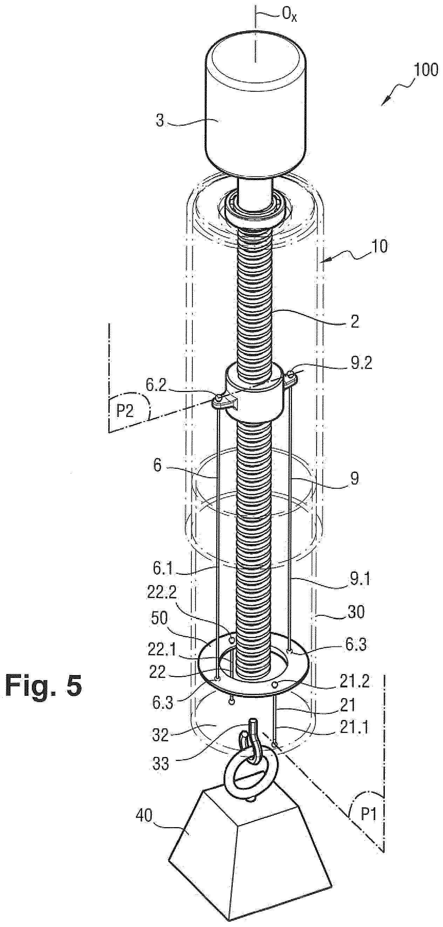

Selon un cinquième mode de réalisation représenté en figure 5, la vis 2 s'étend selon un premier axe Ox vertical. Le vérin à câble 100 comprend un premier tronçon 21.1 d'un troisième câble 21 et un premier tronçon 22.1 d'un quatrième câble 22 qui s'étendent parallèlement au premier axe Ox entre un premier support intermédiaire 50 annulaire et la face transversale 32 du tube 30. Le premier support intermédiaire 50 est relié à l'écrou 4 par les premier et deuxième câbles 6 et 9. Le premier tronçon 21.1 et le premier tronçon 22.1 s'étendent de part et d'autre du premier axe Ox dans un plan P1 comprenant le premier axe Ox. Le plan P1 s'étend sensiblement orthogonalement à un plan P2 comprenant le premier tronçon 6.1 du premier câble 6 et le deuxième tronçon 9.1 du deuxième câble 9. Le troisième câble 21 et le quatrième câble 22 possèdent respectivement une première extrémité 21.2 et 22.2 qui sont reliées chacune au premier support intermédiaire 50 : le troisième câble 21 et le quatrième câble 22 sont ainsi attelés à l'écrou 4. Le troisième câble 21 et le quatrième câble 22 sont également fonctionnellement reliés à l'élément à déplacer 40 via la face transversale 32 du tube 30.

Sous l'effet du moteur 3, une rotation de la vis 2 provoque une rotation identique de l'écrou 4 en raison des frottements de contact entre la vis 2 et l'écrou 4. Ce déplacement met en tension le premier câble 6 et le deuxième câble 9 ainsi que le troisième câble 21 et le quatrième câble 22. Le premier câble 6 et le deuxième câble 9 viennent exercer des efforts s'opposant à un entraînement en rotation de l'écrou 4 par la vis 2, et ces efforts sont transmis au troisième câble 21 et au quatrième câble 22. Les câbles 6, 9, 21, 22 réalisent alors - en sus de leurs fonctions de transmission des efforts de déplacement vers la charge 40 - une fonction d'anti-rotation de sorte qu'une rotation de la vis 2 sous l'action du moteur 3 provoque un déplacement de l'écrou 4 relativement à la vis 2. Ainsi, l'écrou 4 se déplace axialement sous l'effet de la rotation de la vis 2, sans tourner autour du premier axe Ox.

On obtient ainsi un vérin 100 de levage dépourvu de moyens d'anti-rotation autres que les câbles 6, 9, 21, 22 reliés à l'écrou 4.

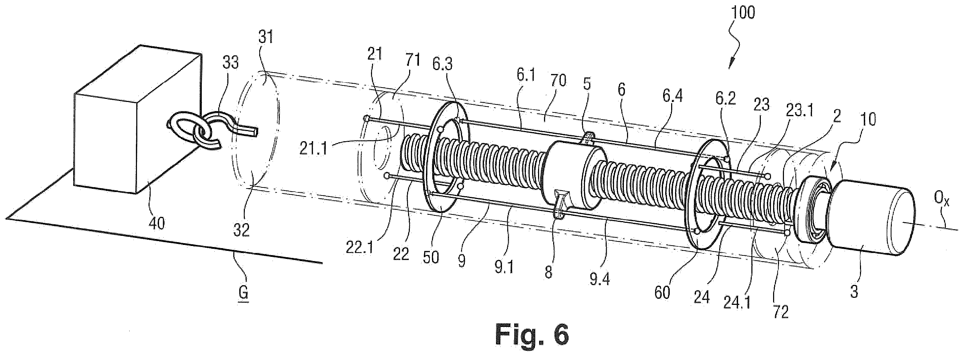

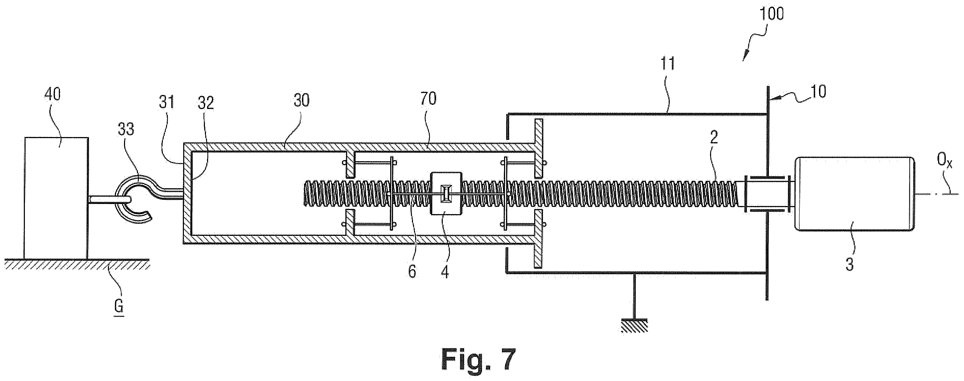

Selon un sixième mode de réalisation représenté aux figures 6 et 7, le premier câble 6 est serti sur le premier oeillet 5 et traverse celui-ci pour avoir un premier tronçon 6.1 et un deuxième tronçon 6.4 s'étendant parallèlement au premier axe Ox de part et d'autre d'un plan P orthogonal au premier axe Ox comprenant le premier œillet 5. De manière homologue, le deuxième câble 9 est serti sur le deuxième œillet 8 et traverse celui-ci pour avoir un premier tronçon 9.1 et un deuxième tronçon 9.4 s'étendant parallèlement au premier axe Ox de part et d'autre d'un plan P orthogonal au premier axe Ox comprenant le deuxième œillet 8. La deuxième extrémité 6.3 du premier tronçon 6.1 est reliée au premier support intermédiaire 50 et la première extrémité 6.2 est reliée à un deuxième support intermédiaire 60. Le premier tronçon 21.1 du troisième câble 21 et le premier tronçon 22.1 du quatrième câble 22 s'étendent parallèlement au premier axe Ox entre le premier support intermédiaire 50 et une première face transversale 71 d'une première cage 70 cylindrique s'étendant autour de l'écrou 4. Le premier tronçon 21.1 et le premier tronçon 22.1 s'étendent de part et d'autre du premier axe Ox dans un plan P1 comprenant le premier axe Ox. Le plan P1 s'étend sensiblement orthogonalement à un plan P2 comprenant le premier tronçon 6.1 et le deuxième tronçon 9.1. De manière homologue, un premier tronçon 23.1 d'un cinquième câble 23 et un premier tronçon 24.1 d'un sixième câble 24 s'étendent parallèlement au premier axe Ox entre le deuxième support intermédiaire 60 et une deuxième face transversale 72 de la première cage 70 opposée à la première face transversale 71. Le premier tronçon 23.1 et le premier tronçon 24.1 s'étendent de part et d'autre du premier axe Ox dans le plan P1. Les premier et deuxième tronçons 6.1 et 6.4 du premier câble 6, les premier et deuxième tronçons 9.1 et 9.4 du deuxième câble 9, le premier tronçon 21.1 du troisième câble 21 et le premier tronçon 22.1 du quatrième câble 22, ainsi que le premier tronçon 23.1 du cinquième câble 23 et le premier tronçon 24.1 du sixième câble 24 sont pré-chargés.

Comme visible en figure 7, la première cage 70 est solidaire du tube 30 monté à l'intérieur du cylindre 11 pour former une liaison glissière selon des modalités connues de l'homme du métier et non représentées. Le tube 30 comprend en son extrémité 31 une face transversale 32 pourvue d'un crochet 33 auquel est reliée une charge 40 à déplacer.

Le premier câble 6 et le deuxième câble 9 sont tendus - tout comme les câbles 21, 22, 23 et 24 -,les premier et deuxième câbles 6 et 9 ainsi que les câbles 21, 22, 23 et 24 exercent des efforts s'opposant à un entraînement en rotation de l'écrou 4 par la vis 2 lors d'une rotation du moteur 3 dans les deux sens de déplacement de l'écrou 4 relativement à la vis 2. Ils réalisent alors - en sus de leur fonction de transmission des efforts de déplacement vers la charge 40 - une fonction d'anti-rotation de sorte qu'une rotation de la vis 2 sous l'action du moteur 3 provoque un déplacement de l'écrou 4 relativement à la vis 2. L'écrou 4 se déplace axialement sous l'effet de la rotation de la vis 2, sans tourner autour du premier axe Ox, et ce, dans les deux sens de rotation de la vis 2. Le vérin à câble 100 selon le sixième mode de réalisation de l'invention permet un déplacement de la charge 40 dans deux sens opposés.

On obtient ainsi un vérin 100 dépourvu de moyens d'anti-rotation autres que les premier, deuxième troisième, quatrième, cinquième et sixième câbles 6, 9, 21, 22, 23, 24 reliés à l'écrou 4.

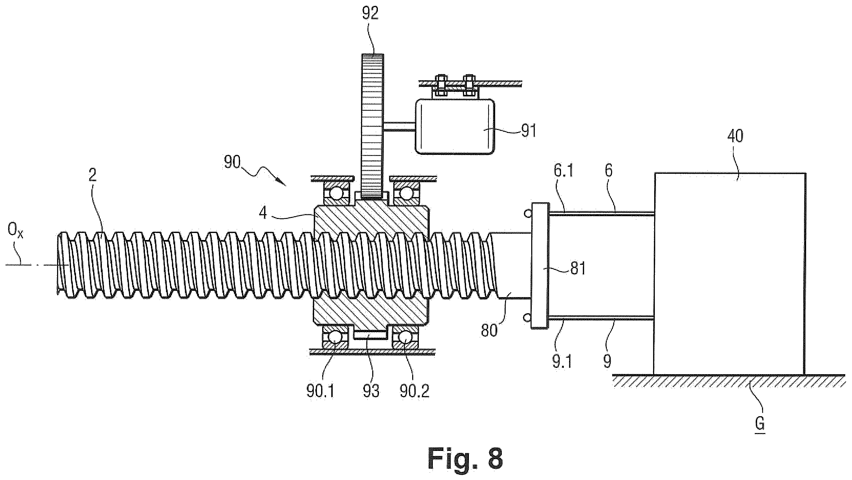

Selon un septième mode de réalisation représenté en figure 8, l'écrou 4 est monté dans un palier 90 solidaire du châssis 10 et qui comprend deux roulements à billes 90.1 et 90.2. Un moteur 91 solidaire du châssis 12 comprend un pignon 92 qui engrène avec une denture extérieure 93 de l'écrou 4 pour entraîner celui-ci en rotation. La vis 2 s'étend selon un premier axe Ox horizontal et comprend une extrémité 80 solidaire d'un disque 81. Un premier câble 6 et un deuxième câble 9 s'étendent parallèlement à l'axe Ox de part et d'autre de celui-ci. Le premier tronçon 6.1 du premier câble 6 s'étend depuis le disque 81 vers la charge 40. Un premier tronçon 9.1 du deuxième câble 9 s'étend depuis le disque 81 vers la charge 40.

Sous l'effet du moteur 91, une rotation de l'écrou 4 provoque une rotation identique de la vis 2 en raison des frottements de contact entre la vis 2 et l'écrou 4. Ce déplacement met en tension le premier câble 6 et le deuxième câble 9 qui viennent alors exercer des efforts s'opposant à un entrainement en rotation de la vis 2 par l'écrou 4. Le premier câble 6 et le deuxième câble 9 réalisent alors - en sus de leur fonction de transmission des efforts de déplacement vers la charge 40 - une fonction d'anti-rotation de sorte qu'une rotation de l'écrou 4 sous l'action du moteur 3 provoque un déplacement de la vis 2 relativement à l'écrou 4. Ainsi, la vis 2 se déplace axialement sous l'effet de la rotation de l'écrou 4 sans tourner autour du premier axe Ox.

On obtient ainsi un vérin 100 de ripage dépourvu de moyens d'anti-rotation autres que le premier câble 6 et le deuxième câble 9 reliés à la vis 2.

Bien entendu, l'invention n'est pas limitée à ce qui vient d'être décrit, mais englobe toute variante entrant dans le cadre de l'invention défini par les revendications.

En particulier,
- bien qu'ici, le châssis soit de forme cylindrique, l'invention s'applique également à d'autres formes de châssis comme par exemple une platine, un tube carré, une forme quelconque ;
- bien qu'ici l'axe de rotation de la vis s'étende horizontalement ou verticalement, l'invention s'applique également à d'autres orientations de l'axe de rotation de la vis comme par exemple une orientation à quarante-cinq degrés ou quelconque ;
- bien qu'ici le vérin comprenne une vis à billes, l'invention s'applique également à d'autres types de vis comme par exemple une vis à filets simples, ou à rouleaux ;
- bien qu'ici le premier câble soit attelé à l'écrou par un sertissage à un oeillet solidaire de l'écrou, l'invention s'applique également à d'autres moyens d'atteler un câble à l'écrou comme par exemple un anneau soudé à l'écrou, une sertissure dans un perçage réalisé dans l'écrou, des tours morts dans un perçage, une fixation à un support intermédiaire ;
- bien qu'ici les câbles s'étendent parallèlement au premier axe, l'invention s'applique également à d'autres configurations des câbles dans lesquelles seul un tronçon des câbles s'étend parallèlement au premier axe, le reste du câble pouvant adopter une orientation quelconque par rapport au premier axe ;
- bien que les première et deuxième poulies soient solidaire d'un même arbre, l'invention s'applique également à des poulies montées sur des arbres indépendants ;
- bien qu'ici les troisième, quatrième, cinquième et sixième câbles soient attelés à l'écrou par un support intermédiaire, l'invention s'applique également à des troisième, quatrième, cinquième et sixième câbles attelés directement à l'écrou ;
- bien qu'ici l'ensemble des câbles du vérin soient pré-chargés, l'invention s'applique également à un unique câble pré-chargé ou seulement une fraction des câbles pré-chargés ;
- bien qu'ici l'écrou soit monté dans un palier qui comprend deux roulements à billes, l'invention s'applique également à d'autres moyens de montage à rotation de l'écrou sur le châssis comme par exemple une douille en bronze, un palier unique à aiguilles ou à rouleaux coniques.

Les efforts exercés par le premier câble et, éventuellement le deuxième câble, pour s'opposer à une rotation de l'écrou par rapport à la vis peuvent être repris par la charge, le châssis, un élément lié au châssis ou tout autre moyen. Dans certaines circonstances, la faiblesse des frottements de contact entre l'écrou et la vis en comparaison avec la tension exercée sur le câble par la charge ou autre est suffisante pour entraîner une translation de l'écrou sans qu'il soit nécessaire de prévoir une reprise des efforts d'anti-rotation exercés par les câbles.

Les premier, deuxième, troisième, quatrième, cinquième et sixième modes de réalisation de l'invention décrits dans le cadre d'une vis entraînée en rotation et déplaçant un écrou sont transposables au cas d'un écrou entraîné en rotation et déplaçant une vis comme décrit dans le septième mode de réalisation de l'invention.

## Revendications

1. Vérin à câble (100) comprenant :
- un châssis (1) ;
- une vis (2) montée sur le châssis et s'étendant selon un premier axe (Oy);
- un écrou (4) coopérant avec la vis (2);
- un premier câble (6) attelé à l'écrou ou à la vis (2) et destiné à être fonctionnellement relié à un élément à déplacer;
- un moteur (3, 91) agencé pour entraîner en rotation la vis (2) ou l'écrou (4);
- le premier câble (6) comprenant au moins un premier tronçon (6.1) s'étendant sensiblement parallèlement au premier axe (Ox), et
le premier câble (6) étant agencé pour exercer des efforts s'opposant à un entraînement en rotation de l'écrou (4) par la vis (2) ou de la vis (2) par l'écrou (4) pour constituer des moyens d'anti-rotation de sorte qu'une rotation de la vis (2) ou de l'écrou (4) sous l'action du moteur (3, 91) provoque un déplacement relatif de l'écrou (4) et de la vis (2),
**caractérisé en ce qu'**il comprend un deuxième câble (9) qui est attelé à l'écrou (4) ou à la vis (2), le deuxième câble (9) étant agencé pour exercer des efforts s'opposant à un entrainement en rotation de l'écrou (4) par la vis (2) ou de la vis (2) par l'écrou (4) pour constituer des moyens d'anti-rotation de sorte qu'une rotation de la vis (2) ou de l'écrou (4) sous l'action du moteur (3, 91) provoque un déplacement relatif de l'écrou (4) et la vis (2),
dans lequel un tronçon (6.1) du premier câble (6) et un tronçon (93.1) du deuxième câble (9) s'étendent de part et d'autre du premier axe (Ox).

2. Vérin (100) selon la revendication 1, dans lequel le premier câble (6) et/ou le deuxième câble (9) est attelé à l'écrou (4) ou à la vis (2) de manière à exercer des efforts s'opposant à un entrainement en rotation de l'écrou (4) par la vis (2) ou de la vis (2) par l'écrou (4) dans les deux sens de déplacement relatif de l'écrou (4) et de la vis (2).

3. Vérin (100) selon l'une quelconque des revendications précédentes, comportant un troisième câble (21) attelé à l'écrou (4) ou à la vis (2), le troisième câble (21) étant fonctionnellement relié à l'élément à déplacer (40).

4. Vérin (100) selon la revendication 3, comportant un quatrième câble (22) attelé à l'écrou (4) ou à la vis (2), le quatrième câble (22) étant fonctionnellement relié à l'élément à déplacer (40).

5. Vérin (100) selon la revendication 4, dans lequel un tronçon (21.1) du troisième câble (21) et un tronçon (22.1) du quatrième câble (22) s'étendent de part et d'autre du premier axe (Ox).

6. Vérin (100) selon l'une des revendications 3 à 5, dans lequel le premier (6) et/ou le deuxième câble (9) s'étendent entre l'écrou (4) ou la vis (2) et un premier support intermédiaire (50) et dans lequel le troisième câble (21) possède une première extrémité (21.2) reliée au premier support intermédiaire (50) et une deuxième extrémité destinée à être fonctionnellement reliée à l'élément à déplacer (40).

7. Vérin (100) selon la revendication 6, dans lequel le quatrième câble (22) possède une première extrémité (22.1) reliée au premier support intermédiaire (50) et une deuxième extrémité destinée à être fonctionnellement reliée à l'élément à déplacer (40).

8. Vérin (100) selon l'une quelconque des revendications 6 ou 7, comportant un cinquième câble (23) attelé à l'écrou (4) ou à la vis (2), le cinquième câble (23) étant fonctionnellement relié à l'élément à déplacer (40).

9. Vérin (100) selon la revendication 8, comprenant un sixième câble (24) attelé à l'écrou(4) ou la vis (2), le sixième câble (24) étant fonctionnellement relié à l'élément à déplacer (40) .

10. Vérin (100) selon la revendication 9, dans lequel un tronçon (23.1) du cinquième câble (23) et un tronçon (24.1) du sixième câble (24) s'étendent de part et d'autre du premier axe (Ox) .

11. Vérin (100) selon l'une des revendication 8 à 10, dans lequel le premier (6) et le deuxième câble (9) s'étendent également entre l'écrou (4) ou la vis (2) et un deuxième support intermédiaire (60) et dans lequel le cinquième câble (23) est relié au deuxième support intermédiaire (60).

12. Vérin (100) selon la revendication 11, dans lequel le sixième câble (24) est relié au deuxième support intermédiaire (60) .

13. Vérin (100) selon l'une quelconque des revendications précédentes, dans lequel l'un quelconque des câbles (6, 9, 21, 22, 23,24) est préchargé.

14. Vérin (100) selon l'une quelconque des revendications précédentes, dans lequel la vis (2) est une vis à billes.

## Patentansprüche

1. Kabelzylinder (100), umfassend:
- einen Rahmen (1);
- eine Spindel (2), die am Rahmen montiert ist und sich entlang einer ersten Achse (Oy) erstreckt;
- eine Mutter (4), die mit der Spindel (2) zusammenwirkt;
- ein erstes Kabel (6), das an die Mutter oder an die Spindel (2) gekoppelt und dazu bestimmt ist, funktional mit einem zu verschiebenden Element verbunden zu werden;
- einen Motor (3, 91), der ausgebildet ist, die Spindel (2) oder die Mutter (4) in Drehung anzutreiben;
- wobei das erste Kabel (6) mindestens einen ersten Abschnitt (6.1) umfasst, der sich im Wesentlichen parallel zur ersten Achse (Ox) erstreckt, und
wobei das erste Kabel (6) ausgebildet ist, Kräfte auszuüben, die einem Drehantrieb der Mutter (4) durch die Spindel (2) oder der Spindel (2) durch die Mutter (4) entgegenwirken, um Drehsicherungsmittel zu bilden, derart, dass eine Drehung der Spindel (2) oder der Mutter (4) unter der Wirkung des Motors (3, 91) eine relative Verschiebung der Mutter (4) und der Spindel (2) bewirkt, **dadurch gekennzeichnet, dass** er ein zweites Kabel (9) umfasst, das an die Mutter (4) oder an die Spindel (2) gekoppelt ist, wobei das zweite Kabel (9) ausgebildet ist, um Kräfte auszuüben, die einem Drehantrieb der Mutter (4) durch die Spindel (2) oder der Spindel (2) durch die Mutter (4) entgegenwirken, um Drehsicherungsmittel zu bilden, derart, dass eine Drehung der Spindel (2) oder der Mutter (4) unter der Wirkung des Motors (3, 91) eine relative Verschiebung der Mutter (4) und der Spindel (2) bewirkt,
wobei sich ein Abschnitt (6.1) des ersten Kabels (6) und ein Abschnitt (93.1) des zweiten Kabels (9) zu beiden Seiten der ersten Achse (Ox) erstrecken.

2. Zylinder (100) nach Anspruch 1, bei dem das erste Kabel (6) und/oder das zweite Kabel (9) an die Mutter (4) oder an die Spindel (2) gekoppelt ist, um Kräfte auszuüben, die einem Drehantrieb der Mutter (4) durch die Spindel (2) oder der Spindel (2) durch die Mutter (4) in beiden Richtungen einer relativen Verschiebung der Mutter (4) und der Spindel (2) entgegenwirken.

3. Zylinder (100) nach einem der vorhergehenden Ansprüche, umfassend ein drittes Kabel (21), das an die Mutter (4) oder an die Spindel (2) gekoppelt ist, wobei das dritte Kabel (21) funktional mit dem zu verschiebenden Element (40) verbunden ist.

4. Zylinder (100) nach Anspruch 3, umfassend ein viertes Kabel (22), das an die Mutter (4) oder an die Spindel (2) gekoppelt ist, wobei das vierte Kabel (22) funktional mit dem zu verschiebenden Element (40) verbunden ist.

5. Zylinder (100) nach Anspruch 4, bei dem sich ein Abschnitt (21.1) des dritten Kabels (21) und ein Abschnitt (22.1) des vierten Kabels (22) zu beiden Seiten der ersten Achse (Ox) erstrecken.

6. Zylinder (100) nach einem der Ansprüche 3 bis 5, bei dem sich das erste (6) und/oder das zweite Kabel (9) zwischen der Mutter (4) oder der Spindel (2) und einem ersten Zwischenträger (50) erstrecken, und bei dem das dritte Kabel (21) ein erstes Ende (21.2) hat, das mit dem ersten Zwischenträger (50) verbunden ist, sowie ein zweites Ende, das funktional mit dem zu verschiebenden Element (40) verbunden ist.

7. Zylinder (100) nach Anspruch 6, bei dem das vierte Kabel (22) ein erstes Ende (22.1) hat, das mit dem ersten Zwischenträger (50) verbunden ist, und ein zweites Ende, das dazu bestimmt ist, funktional mit dem zu verschiebenden Element (40) verbunden zu werden.

8. Zylinder (100) nach einem der Ansprüche 6 oder 7, umfassend ein fünftes Kabel (23), das an die Mutter (4) oder an die Spindel (2) gekoppelt ist, wobei das fünfte Kabel (23) funktional mit dem zu verschiebenden Element (40) verbunden ist.

9. Zylinder (100) nach Anspruch 8, umfassend ein sechstes Kabel (24), das an die Mutter (4) oder die Spindel (2) gekoppelt ist, wobei das sechste Kabel (24) funktional mit dem zu verschiebenden Element (40) verbunden ist.

10. Zylinder (100) nach Anspruch 9, bei dem sich ein Abschnitt (23.1) des fünften Kabels (23) und ein Abschnitt (24.1) des sechsten Kabels (24) zu beiden Seiten der ersten Achse (Ox) erstrecken.

11. Zylinder (100) nach einem der Ansprüche 8 bis 10, bei dem sich das erste (6) und das zweite Kabel (9) ebenso zwischen der Mutter (4) oder der Spindel (2) und einem zweiten Zwischenträger (60) erstrecken und bei dem das fünfte Kabel (23) mit dem zweiten Zwischenträger (60) verbunden ist.

12. Zylinder (100) nach Anspruch 11, bei dem das sechste Kabel (24) mit dem zweiten Zwischenträger (60) verbunden ist.

13. Zylinder (100) nach einem der vorhergehenden Ansprüche, bei dem ein beliebiges der Kabel (6, 9, 21, 22, 23, 24) vorgespannt ist.

14. Zylinder (100) nach einem der vorhergehenden Ansprüche, bei dem die Spindel (2) eine Kugelumlaufspindel ist.

## Claims

1. A cable jack (100) comprising:
- a chassis (1);
- a screw (2) mounted on the chassis and extending along a first axis (Oy);
- a nut (4) collaborating with the screw (2);
- a first cable (6) coupled to the nut or to the screw (2) and intended to be functionally connected to an element that is to be moved;
- a motor (3, 91) designed to drive the rotation of the screw (2) or the nut (4);
- the first cable (6) comprises at least a first portion (6.1) extending substantially parallel to the first axis (Ox), and
- the first cable (6) is designed to apply forces that oppose a rotational driving of the nut (4) by the screw (2) or of the screw (2) by the nut (4) so as to constitute anti-rotation means so that a rotation of the screw (2) or of the nut (4) under the action of the motor (3, 91) gives rise to a relative movement of the nut (4) and of the screw (2) Being **characterized in that** it comprises a second cable (9) that is coupled to the nut (4) or to the screw (2), the second cable (9) being designed to exert forces opposing a rotational driving of the nut (4) by the screw (2) or of the screw (2) by the nut (4) to constitute anti-rotation means so that a rotation of the screw (2) or of the nut (4) under the action of the motor (3, 91) gives rise to a relative movement of the nut (4) and of the screw (2),
wherein a portion (6.1) of the first cable (6) and a portion (93.1) of the second cable (9) extend one on each side of the first axis (Ox).

2. The jack (100) as claimed in claim 1, wherein the first cable (6) and/or the second cable (9) is coupled to the nut (4) or to the screw (2) so as to exert forces opposing a rotational driving of the nut (4) by the screw (2) or of the screw (2) by the nut (4) in both directions of relative movement of the nut (4) and of the screw (2).

3. The jack (100) as claimed in any one of the preceding claims, comprising a third cable (21) coupled to the nut (4) or to the screw (2), the third cable (21) being functionally connected to the element (40) that is to be moved.

4. The jack (100) as claimed in claim 3, comprising a fourth cable (22) coupled to the nut (4) or to the screw (2), the fourth cable (22) being functionally connected to the element (40) that is to be moved.

5. The jack (100) as claimed in claim 4, wherein a portion (21.1) of the third cable (21) and a portion (22.1) of the fourth cable (22) extend one on each side of the first axis (Ox) .

6. The jack (100) as claimed in one of claims 3 to 5, wherein the first (6) and/or the second cable (9) extend between the nut (4) or the screw (2) and a first intermediate support (50) and wherein the third cable (21) has a first end (21.2) connected to the first intermediate support (50) and a second end intended to be functionally connected to the element (40) that is to be moved.

7. The jack (100) as claimed in claim 6, wherein the fourth cable (22) has a first end (22.1) connected to the first intermediate support (50) and a second end intended to be functionally connected to the element (40) that is to be moved.

8. The jack (100) as claimed in either one of claims 6 and 7, comprising a fifth cable (23) coupled to the nut (4) or to the screw (2), the fifth cable (23) being functionally connected to the element (40) that is to be moved.

9. The jack (100) as claimed in claim 8, comprising a sixth cable (24) coupled to the nut (4) or the screw (2), the sixth cable (24) being functionally connected to the element (40) that is to be moved.

10. The jack (100) as claimed in claim 9, wherein a portion (23.1) of the fifth cable (23) and a portion (24.1) of the sixth cable (24) extend one on each side of the first axis (Ox).

11. The jack (100) as claimed in one of claims 8 to 10, wherein the first (6) and the second cable (9) also extend between the nut (4) or the screw (2) and a second intermediate support (60) and wherein the fifth cable (23) is connected to the second intermediate support (60).

12. The jack (100) as claimed in claim 1, wherein the sixth cable (24) is connected to the second intermediate support (60).

13. The jack (100) as claimed in any one of the preceding claims, wherein any one of the cables (6, 9, 21, 22, 23, 24) is preloaded.

14. The jack (100) as claimed in any one of the preceding claims, in which the screw (2) is a ball screw.
